# FASCICULE DE BREVET EUROPEEN

(11) **EP 3 417 398 B1**
(45) Date de publication et mention de la délivrance du brevet: **04.12.2019**
(21) Numéro de dépôt: 17707636.1
(22) Date de dépôt: 06.02.2017
(51) Int. Cl.: G06K 9/00, B60W 40/08, B60W 50/14

(54) **DISPOSITIF ET PROCÉDÉ D'ESTIMATION DU NIVEAU D'ATTENTION D'UN CONDUCTEUR D'UN VÉHICULE**
VORRICHTUNG UND VERFAHREN ZUR KALKULATION DES AUFMERKSAMKEITSGRADES EINES FAHRERS EINES FAHRZEUGS
DEVICE AND METHOD FOR ESTIMATING THE ATTENTION LEVEL OF A DRIVER OF A VEHICLE

(30) Priorité: 19.02.2016 FR 1651371
(43) Date de publication de la demande: 26.12.2018
(73) Titulaire: PSA AUTOMOBILES S.A., 78300 Poissy (FR)
(72) Inventeur: LARGE, Frederic, 78180 MONTIGNY LE BRETONNEUX (FR)
(86) Numéro de dépôt international: PCT/FR2017/050268
(87) Numéro de publication internationale: WO 2017/140969

(56) Documents cités:
- EP-A1- 2 797 320
- EP-A2- 2 065 835
- FR-A1- 2 947 769
- US-A1- 2015 045 986

## Description

L'invention appartient au domaine des dispositifs d'aide à la conduite de véhicules, en particulier aux méthodes d'appréciation de l'attention du conducteur.

L'invention porte plus précisément sur une méthode pour estimer la capacité du conducteur d'un véhicule à contrôler le maintien du véhicule dans sa voie de circulation, afin de pouvoir apprécier son niveau d'attention et, le cas échéant, l'avertir lors d'un franchissement potentiellement non souhaité d'une ligne de délimitation d'une voie de circulation.

Aujourd'hui, les véhicules automobiles comprennent de nombreux systèmes d'aide à la conduite. Ces systèmes sont couramment désignés sous l'acronyme bien connu de l'homme de l'art ADAS, pour Advanced Driver Assistance Systems, signifiant systèmes avancés d'assistance au conducteur.

De tels systèmes d'aide à la conduite équipent de plus en plus de véhicules automobiles. La plupart des fonctions assurées par ces systèmes ADAS nécessitent que le véhicule soit en mesure de détecter la voie de circulation dans laquelle il se trouve.

Parmi ces fonctions, l'association de données issues d'une caméra frontale, capturant des images de la route, devant le véhicule, et des données issues d'une caméra située dans l'habitacle, filmant le visage du conducteur, peut être exploitée pour déterminer un niveau d'attention ou d'inattention du conducteur.

En effet, actuellement, le développement de technologies relatives à des véhicules autonomes, et de manière plus actuelle, pour les fonctions d'aide à la conduite faisant intervenir des phases d'automatisation du véhicule, est tel que l'information relative au niveau d'attention ou d'inattention du conducteur est capitale, notamment en vue d'une éventuelle nécessaire reprise de contrôle du véhicule.

Dans ce contexte, les images issues de la caméra frontale sont analysées de façon à estimer la position latérale du véhicule dans sa voie de circulation, notamment afin de détecter un éventuel franchissement de ligne non souhaité.

Dans l'état de la technique, l'information relative à la position latérale du véhicule dans sa voie de circulation n'est généralement disponible que via la caméra frontale et dépend donc fortement de la robustesse et de la disponibilité des images qu'elle capture.

Certains véhicules sont en effet équipés d'une telle caméra frontale susceptible de permettre la détermination de la position latérale du véhicule dans une voie de circulation. Cependant, comme cela est connu, les données issues d'une telle caméra frontale peuvent être altérées en raison de l'hypothèse utilisée, et généralement erronée, de « sol plan », ou encore en raison de l'hypothèse utilisée, et généralement erronée, d'assiette horizontale du véhicule, ...etc.

De plus, pour tous ces systèmes, les paramètres de calibrage des caméras pour calculer la position relative des lignes par rapport au véhicule. Cela les rend sensibles à tout dé-calibrage (choc sur une caméra, changement d'assiette du véhicule en fonction de son chargement). De même, ces systèmes considèrent que le sol est un plan horizontal dans le repère véhicule. Cette hypothèse n'est pas toujours vérifiée et cela entraine des erreurs de positionnement lorsque la route monte ou descend, ou que la route présente un dévers sur la portion au sol utilisée pour détecter la ligne.

Ainsi, en pratique, selon l'état de la technique, la position latérale d'un véhicule dans une voie de circulation est une information exploitée par plusieurs fonctions d'aide à la conduite et pour l'appréciation du niveau d'attention du conducteur, notamment en combinaison avec une analyse d'images du visage du conducteur.

Le système observe ainsi notamment l'évolution de la position latérale du véhicule au cours du temps pour estimer un franchissement de la ligne et en alerter le conducteur.

Le document FR2947769_A1 décrit un système comprenant une caméra située à l'arrière du véhicule, destinée à permettre le suivi de la trajectoire du véhicule en vue d'envoyer une alerte au conducteur en cas d'écart par rapport à une trajectoire idéale prédéterminée. Ce document est représentatif de l'état de la technique.

Aujourd'hui, l'information relative à la position du véhicule dans une voie de circulation est généralement déterminée en temps réel à partir des images capturées par une caméra frontale.

Or, outre les défauts liés à l'imprécision, voire à l'impossibilité d'estimer la position latérale des véhicules dans leur voie de circulation, ces systèmes connus présentent le défaut que les paramètres de calibration des caméras mises en œuvre doivent être finement réglés. Cela les rend sensibles à tout « dé-calibration » engendrée par un choc sur une caméra, un changement d'assiette du véhicule ...etc. De même, ces systèmes considèrent que le sol est un plan horizontal dans le repère véhicule, ce qui constitue une hypothèse globalement erronée.

Par ailleurs, pour estimer le niveau d'attention du conducteur et détecter efficacement un éventuel franchissement de ligne intempestif, il est utile de mémoriser, par tronçon de voie, l'évolution dans le temps de la position latérale relative du véhicule dans sa voie de circulation.

Ainsi, pour résoudre efficacement le problème soulevé ci-dessus, sans engendrer de nouveaux inconvénients, il est prévu d'intégrer sur une certaine durée des images du sol capturées par au moins une caméra, de façon à éliminer les erreurs dues à des incohérences ou à des indisponibilités locales. Grâce aux images capturées, le procédé selon l'invention permet la création d'une vue aérienne du véhicule dans sa voie de circulation, intégrée sur une certaine durée.

De plus, en suivant et en anticipant l'évolution dans le temps de la position latérale du véhicule dans sa voie, et de préférence en associant ce suivi à une analyse adaptée d'images capturées du visage du conducteur, le procédé selon l'invention permet d'estimer le niveau d'attention du conducteur.

A cet effet, le procédé d'estimation du niveau d'attention du conducteur d'un véhicule, tenant compte de l'évolution de la position latérale du véhicule dans une voie de circulation, selon l'invention, comprend la reconstitution d'une vue aérienne d'un tronçon de route obtenue en mémorisant, au fur et à mesure du déplacement du véhicule, une portion du sol située au plus proche du véhicule. Le procédé selon l'invention comprend par ailleurs le positionnement du véhicule, à un instant précédent, dans ladite vue aérienne reconstituée, ainsi que la mémorisation des positions successives du véhicule, sur le tronçon de route donné. La présente invention permet ainsi la création d'une vue aérienne d'une portion de route située, dans le repère temporel du véhicule, en amont dudit véhicule.

Selon un mode de réalisation avancé du procédé selon l'invention, l'association d'une analyse d'images du visage du conducteur à l'analyse des positions successives du véhicule dans la vue aérienne permet de déterminer précisément un niveau d'attention du conducteur du véhicule.

Plus précisément, l'invention a pour objet un procédé d'estimation d'un niveau d'attention du conducteur d'un véhicule en mouvement dans une voie de circulation, comprenant les étapes suivantes :
- la capture d'images du sol en continue, à l'avant et/ou à l'arrière du véhicule, au moyen d'au moins une caméra adaptée, lesdites images correspondant à une surface au sol ayant une largeur au moins égale à une largeur de voie de circulation et une profondeur,
- la reconstitution d'une vue aérienne d'un tronçon de route à des instants t courants successifs, par intégration dans le temps des images capturées entre un instant t1 = t - dt1 et l'instant t courant, dt1 étant positif,
- l'estimation de la position latérale du véhicule dans la vue aérienne reconstituée auxdits instants t courants successifs, et la mémorisation desdites positions estimées du véhicule entre un instant t2 = t - dt2 et l'instant t courant, dt2 étant positif et indépendant de dt1,
- la détermination d'un niveau d'attention estimé du conducteur à un instant t3 = t - dt3, dt3 étant positif, l'instant t3 étant postérieur à l'instant t2 et l'instant t3 étant postérieur ou égal à l'instant t1, en fonction :
   ∘ de l'évolution de la position latérale du véhicule dans la vue aérienne entre les instants t2 et t3,
   ∘ de l'analyse du profil d'une portion de route appartenant à la vue aérienne reconstituée à l'instant t courant et correspondant à une séquence d'images capturées entre l'instant t1 et l'instant t courant, ladite portion de route étant au moins partiellement située en amont du véhicule à l'instant t3.

Ainsi, grâce au procédé selon l'invention, il est possible disposer d'une vue aérienne donnant, dans le repère temporel du véhicule, une portion de tronçon de route située en amont du véhicule à l'instant t3. L'analyse de l'évolution de la position latérale du véhicule dans le temps est utilisée pour estimer le niveau d'attention du conducteur.

Selon un mode de réalisation, après l'étape de reconstitution d'une vue aérienne du sol, la détection d'au moins une ligne formant un marquage au sol de délimitation d'une voie de circulation dans ladite vue aérienne reconstituée, l'estimation de la position du véhicule dans la vue aérienne reconstituée consistant à déterminer la position relative dudit véhicule par rapport à ladite au moins une ligne.

Selon un mode de réalisation préféré, le procédé comprend par ailleurs :
- la capture d'images du visage du conducteur,
- l'analyse des images du visage du conducteur, la détermination du niveau d'attention estimé du conducteur étant également fonction de ladite analyse des images du visage du conducteur.

Selon un mode de réalisation, l'estimation de la position relative du véhicule par rapport à ladite au moins une ligne dans la vue aérienne reconstituée comprend l'assemblage d'images capturées successives correspondant à une surface au sol présentant une profondeur déterminée en fonction de la vitesse du véhicule.

Selon un mode de réalisation, la détection d'au moins une ligne formant un marquage au sol de délimitation d'une voie de circulation dans la vue aérienne reconstituée comprend la mise en œuvre une transformée de Hough.

Selon un mode de réalisation, le procédé selon l'invention comprend par ailleurs une étape d'avertissement du conducteur lorsque le véhicule franchit ladite au moins une ligne.

Avantageusement, ladite largeur de voie peut être égale à cinq mètres.

Avantageusement, ladite profondeur de la surface au sol des images capturées étant inférieure à deux mètres.

La présente invention vise aussi un dispositif d'estimation de la position latérale d'un véhicule dans une voie de circulation, comprenant au moins une caméra pour réaliser la capture d'images du sol en continue, à l'avant et/ou à l'arrière du véhicule, une unité de calcul et une unité de mémorisation, configurées pour mettre en œuvre le procédé selon l'une des revendications précédentes.

Avantageusement, ladite au moins une caméra est une caméra frontale disposée à l'avant du véhicule.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, le schéma-bloc des étapes du procédé d'estimation du niveau d'attention du conducteur d'un véhicule, conformément à l'invention,
- la figure 2, le schéma représentant graphiquement le processus d'estimation de la position latérale du véhicule, conformément à un mode de réalisation préféré du procédé selon l'invention.

Dans ce qui va suivre, les modes de réalisation décrits s'attachent plus particulièrement à une mise en œuvre du dispositif selon l'invention au sein d'un véhicule automobile. Cependant, toute mise en œuvre dans un contexte différent, en particulier dans tout type de véhicule terrestre, est également visée par la présente invention.

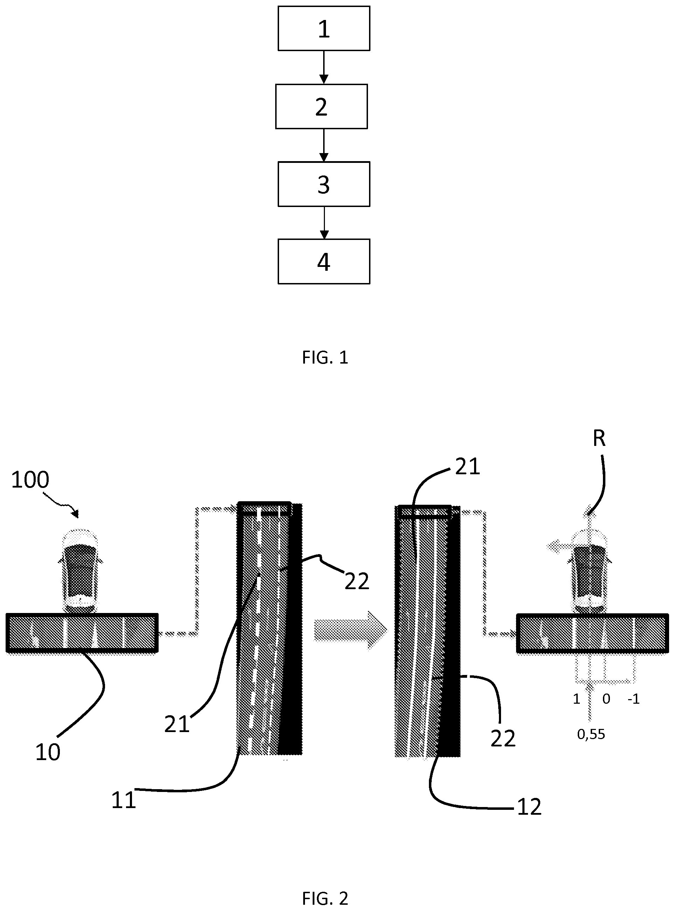

La figure 1 représente des blocs fonctionnels matérialisant les étapes du procédé selon l'invention.

Ainsi, le procédé selon l'invention prévoit une première étape 1 de capture d'images du sol à l'avant et/ou à l'arrière du véhicule, en continue. Les images capturées correspondent à une surface au sol présentant une largeur correspondant au moins à une largeur de voie de circulation, soit environ 5 mètres. La caméra utilisée peut ainsi être une caméra frontale capturant des images du sol à l'avant du véhicule, ou une caméra disposée à l'arrière, telle qu'une caméra d'aide au stationnement, dont les images capturées successives sont intégrées dans le temps pour former des vues ariennes reconstituées successives.

En effet, à partir des images capturées, le procédé selon l'invention comporte une étape 2 de reconstitution de vues aériennes à des instants t courants successifs d'un tronçon de route, par intégration dans le temps des images capturées entre un instant t1 = t - dt1 et l'instant t courant, dt1 étant positif.

Il est à noter que, ladite vue aérienne n'étant pas destinée à être affichée, un alignement fin n'est pas requis. Selon un mode de réalisation, il est néanmoins prévu un recalage des images en fonction du déplacement du véhicule estimé au moyen de données odométriques obtenues à l'aide de capteurs adaptés mesurant des tops roues ou l'angle du volant par exemple.

Selon un mode de réalisation, il est prévu un recouvrement entre des images capturées successivement, notamment afin de faciliter la détection de lignes de séparation de voies de circulation et améliorer les raccords entre images successives.

A partir de la vue aérienne reconstituée, le procédé selon l'invention prévoit une étape 3 d'estimation de la position latérale du véhicule sur le tronçon de route, dans sa voie de circulation. Les positions latérales successives du véhicule sur le tronçon de route sont calculées à chaque instant t courant. En outre, lesdites positions estimées du véhicule sont mémorisées entre un instant t2 = t - dt2 et l'instant t courant, dt2 étant positif et indépendant de dt1.

A cette fin, selon un mode de réalisation préféré, le procédé comprend la détection d'une ou plusieurs lignes de marquage au sol matérialisant la délimitation entre les voies de circulation.

Il existe ainsi des techniques connues permettant la détection de lignes dans une image. Par exemple, la détection de lignes dans la vue aérienne reconstituée peut être réalisée par la mise en œuvre d'une transformée de Hough. La transformée de Hough permet en effet d'identifier l'ensemble des droites passant par un point (Y,X) du sol. Réciproquement, pour un couple de coefficients (a,b) définissant une droite, la transformée de Hough permet d'identifier l'ensemble des points (X,Y) situés sur cette droite. Les coefficients 'a' et 'b' correspondent respectivement à l'angle que forme la droite avec l'axe des Y, et à la distance de la droite à l'origine.

Il est à noter cependant que les lignes délimitant une voie de circulation ne sont pas des droites parfaites. Généralement, il s'agit de clothoïdes, c'est-à-dire des lignes à courbure continue. Pour exploiter de façon optimale le procédé selon l'invention, il est prévu de transposer le principe de Hough à l'analyse de telles clothoïdes.

En effet, un véhicule dans lequel le procédé selon l'invention est mis en œuvre évolue a priori à l'intérieur d'une voie de circulation, de façon sensiblement parallèle aux lignes qui la délimitent. Selon un mode de réalisation, la détection de ces lignes peut ainsi être approximée, dans l'espace de Hough, à une recherche des lignes dont les coefficients 'a' sont proches de 0, et les coefficients 'b' sont inférieurs à la distance maximale à laquelle on souhaite détecter des lignes de séparation des voies de circulation, de part et d'autre du véhicule.

Ce filtrage permet de limiter les cas de faux positifs. Dans le cas d'une transformation de Hough généralisée, appliquée aux clothoïdes, le principe et l'objectif du filtrage restent en effet identiques.

Par ailleurs, les marquages au sol matérialisant les lignes de séparation des voies de circulation sont toujours plus clairs que la chaussée. Par conséquent, un autre filtrage consiste à ne considérer que les gradients correspondant à des lignes claires sur fond plus sombre, et de taille minimale. Ce filtrage simple alternatif permet également de limiter les cas de faux positifs.

Selon un mode de réalisation, il est par ailleurs prévu un filtrage temporel de l'algorithme de détection des lignes. En référence à la figure 2, la vue aérienne 11, reconstituée à partir d'images capturées 10 intégrées dans le temps, devient la vue aérienne 12 après filtrage temporel, permettant une meilleure identification des lignes 21, 22 de séparation entre les voies de circulation/

Il est à noter que tout autre algorithme permettant de détecter des lignes sur la vue aérienne reconstituée peut également être mis en œuvre, notamment dans le cadre du procédé selon l'invention.

Lorsque plusieurs lignes matérialisées par un marquage au sol sont détectées, la détection de la voie de circulation dans laquelle évolue le véhicule se résume à l'identification des lignes pertinentes, correspondant aux lignes les plus proches à gauche et à droite dudit véhicule et la position latérale du véhicule dans sa voie de circulation est aisément déterminable.

Selon un mode de réalisation représenté à la figure 2, le procédé prévoit par exemple de choisir comme origine 0 le centre du véhicule, la position latérale du véhicule 100 dans la voie est calculée en fonction de la largeur du véhicule, de sorte que -1 corresponde à la présence des roues gauches sur la ligne de gauche, et 1 à la présence des roues droites sur la ligne de droite. Ainsi, les valeurs entre -1 et 1, par exemple 0,55 comme sur la figure 2, correspondent à un véhicule à l'intérieur de sa voie de circulation, tandis que les valeurs au-delà de -1 et de 1 traduisent un véhicule à cheval sur deux voies de circulation.

Il est à noter que tout autre algorithme permettant d'estimer la position latérale relative du véhicule par rapport aux lignes de séparation des voies de circulation, détectées dans la vue aérienne reconstituée conformément aux étapes décrites précédemment, peut également être mis en œuvre dans le cadre du procédé selon l'invention.

Dès lors, le procédé selon l'invention comprend une étape 4 de détermination d'un niveau d'attention estimé du conducteur à un instant t3 = t - dt3, dt3 étant positif, l'instant t3 étant postérieur à l'instant t2 et l'instant t3 étant postérieur ou égal à l'instant t1, en fonction :
- de l'évolution de la position latérale du véhicule dans la vue aérienne entre les instants t2 et t3,
- de l'analyse du profil d'une portion de route appartenant à la vue aérienne reconstituée à l'instant t courant et correspondant à une séquence d'images capturées entre l'instant t1 et l'instant t courant, ledit tronçon étant au moins partiellement situé devant le véhicule à l'instant t3.

En effet, l'analyse du niveau d'attention du conducteur est réalisé à un instant t3 situé dans le passé par rapport à l'instant t courant. Ainsi, si l'instant t3 et l'instant t1 sont égaux, alors la portion de du tronçon de route figurant sur la vue aérienne et correspondant aux images capturées entre l'instant t1 et l'instant t courant est entièrement situé en amont du véhicule, à l'instant « passé » t3 = t1. Si l'instant t3 est postérieur à l'instant t1, alors la portion de du tronçon de route figurant sur la vue aérienne et correspondant aux images capturées entre l'instant t1 et l'instant t courant est partiellement situé en amont du véhicule et partiellement situé à l'arrière du véhicule, à l'instant « passé t3 postérieur à t1.

Selon l'étape 4 du procédé selon l'invention, à l'instant t3 où est déterminé le niveau d'attention du conducteur, dans le repère temporel du véhicule, la vue aérienne reconstituée comporte par conséquent toujours une portion du tronçon de route située en amont dudit véhicule. Le profil de ce tronçon situé en amont du véhicule est analysé pour établir une estimation du niveau d'attention du conducteur, en fonction par ailleurs de l'évolution dans le temps de la position latérale du véhicule.

En outre, selon l'invention, les vues aériennes successives de tronçons de route sont mémorisées, de même que les positions latérales estimées successives du véhicule, la mémorisation étant assurée aussi longtemps que nécessaire de manière à ce qu'il soit possible de connaître l'ensemble des positions successives du véhicule entre le moment où il est entré sur le tronçon reconstruit et l'instant t courant.

Il est à noter que, pour l'application considérée, le décalage temporel et le retard induit par le fait que l'on détermine le niveau d'attention du conducteur à un instant t3 situé dans le passé par rapport à l'instant t courant sont parfaitement acceptables.

Par ailleurs, il est précisé que, dans le cas particulier d'un embouteillage ou de vitesse lente, le nombre de positions latérales successives du véhicule peut être très élevé pour couvrir l'ensemble du tronçon. Pour cette raison, selon un mode de réalisation, toutes les positions ne sont pas nécessairement mémorisées dans ce cas ; seules celles suffisamment distantes les unes des autres le sont.

Ainsi, selon l'invention, l'analyse de l'évolution de la position latérale du véhicule sur le tronçon permet de déterminer directement une estimation du niveau d'attention du conducteur.

Selon un mode de réalisation préféré, le procédé comprend en outre la capture d'images du visage du conducteur dont l'analyse, par traitement d'image selon des algorithmes connus, donne une indication supplémentaire du niveau d'attention du conducteur.

Ainsi, l'analyse des images du visage est combinée à l'analyse de l'évolution de la position latérale du véhicule pour déterminer le niveau d'attention du conducteur.

Par ailleurs, pour mettre en œuvre ce procédé, l'invention vise également un système comprenant une caméra, une unité de calcul et une unité de mémorisation adaptées. Comme décrit précédemment, ladite caméra peut par exemple être une caméra frontale ou une caméra d'aide au stationnement du type de celles utilisées dans des véhicules existants.

Il est précisé que la présente invention n'est pas limitée aux exemples décrits ci-dessus et est susceptible de nombreuses variantes accessibles à l'homme de l'art.

## Revendications

1. Procédé d'estimation du niveau d'attention du conducteur d'un véhicule en mouvement dans une voie de circulation, comprenant les étapes suivantes :
- la capture d'images (10) du sol en continue, à l'avant et/ou à l'arrière du véhicule (100), au moyen d'au moins une caméra adaptée, lesdites images (10) correspondant à une surface au sol ayant une largeur au moins égale à une largeur de voie de circulation et une profondeur,
- la reconstitution d'une vue aérienne (11, 12) d'un tronçon de route à des instants t courants successifs, par intégration dans le temps des images capturées (10) entre un instant t1 = t - dt1 et l'instant t courant, dt1 étant positif,
- l'estimation de la position latérale du véhicule (100) dans la vue aérienne reconstituée (11, 12) auxdits instants t courants successifs, et la mémorisation desdites positions estimées du véhicule entre un instant t2 = t - dt2 et l'instant t courant, dt2 étant positif et indépendant de dt1,
- la détermination d'un niveau d'attention estimé du conducteur à un instant t3 = t - dt3, dt3 étant positif, l'instant t3 étant postérieur à l'instant t2 et l'instant t3 étant postérieur ou égal à l'instant t1, en fonction :
∘ de l'évolution de la position latérale du véhicule dans la vue aérienne entre les instants t2 et t3,
∘ de l'analyse du profil d'une portion de route appartenant à la vue aérienne reconstituée à l'instant t courant et correspondant à une séquence d'images capturées entre l'instant t1 et l'instant t courant, ladite portion de route étant au moins partiellement située en amont du véhicule à l'instant t3.

2. Procédé selon la revendication 1, comprenant, après l'étape de reconstitution d'une vue aérienne (11, 12) du sol, la détection d'au moins une ligne formant un marquage au sol de délimitation d'une voie de circulation dans ladite vue aérienne reconstituée, l'estimation de la position du véhicule (100) dans la vue aérienne reconstituée (11, 12) consistant à déterminer la position relative dudit véhicule par rapport à ladite au moins une ligne (21, 22).

3. Procédé selon l'une des revendications précédentes, comprenant par ailleurs :
- la capture d'images du visage du conducteur,
- l'analyse des images du visage du conducteur, la détermination du niveau d'attention estimé du conducteur étant également fonction de ladite analyse des images du visage du conducteur.

4. Procédé selon l'une des revendications précédentes, dans lequel l'estimation de la position relative du véhicule (100) par rapport à ladite au moins une ligne (11, 12) dans la vue aérienne reconstituée comprend l'assemblage d'images capturées (10) successives correspondant à une surface au sol présentant une profondeur déterminée en fonction de la vitesse du véhicule (100).

5. Procédé selon la revendication 1, dans lequel la détection d'au moins une ligne (21, 22) formant un marquage au sol de délimitation d'une voie de circulation dans la vue aérienne reconstituée (11, 12) comprend la mise en œuvre une transformée de Hough.

6. Procédé selon l'une des revendications précédentes, comprenant par ailleurs une étape d'avertissement du conducteur lorsque le véhicule (100) franchit ladite au moins une ligne.

7. Procédé selon l'une des revendications précédentes, ladite largeur de voie étant égale à cinq mètres.

8. Procédé selon l'une des revendications précédentes, ladite profondeur de la surface au sol des images capturées étant inférieure à deux mètres.

9. Dispositif d'estimation du niveau d'attention du conducteur d'un véhicule dans une voie de circulation, comprenant au moins une caméra pour réaliser la capture d'images (10) du sol en continue, à l'avant et/ou à l'arrière du véhicule, une unité de calcul et une unité de mémorisation, configurées pour mettre en œuvre le procédé selon l'une des revendications précédentes.

10. Dispositif selon la revendication précédente, dans lequel ladite au moins une caméra est une caméra frontale disposée à l'avant du véhicule.

## Patentansprüche

1. Verfahren zur Schätzung des Aufmerksamkeitsgrads des Fahrers eines sich bewegenden Fahrzeugs in einem Fahrstreifen, umfassend die folgenden Schritte:
- kontinuierliche Aufnahme von Bildern (10) des Bodens an der Vorderseite und/oder an der Hinterseite des Fahrzeugs (100) mittels mindestens einer angepassten Kamera, wobei die Bilder (10) einer Bodenoberfläche entsprechen, die eine Breite mindestens gleich einer Fahrstreifenbreite und eine Tiefe besitzen,
- die Rekonstitution eines Luftbildes (11, 12) eines Streckenabschnitts zu aufeinanderfolgenden aktuellen Zeitpunkten t durch zeitliche Integration der aufgenommenen Bilder (10) zwischen einem Zeitpunkt t1 = t - dt1 und dem aktuellen Zeitpunkt t, wobei dt1 positiv ist,
- die Schätzung der seitlichen Position des Fahrzeugs (100) im rekonstituierten Luftbild (11, 12) zu den aufeinanderfolgenden aktuellen Zeitpunkten t und die Speicherung der geschätzten Positionen des Fahrzeugs zwischen einem Zeitpunkt t2 = t - dt2 und dem aktuellen Zeitpunkt t, wobei dt2 positiv und unabhängig von dt1 ist,
- die Bestimmung eines geschätzten Aufmerksamkeitsgrads des Fahrers zu einem Zeitpunkt t3 = t - dt3, wobei dt3 positiv ist, der Zeitpunkt t3 nach dem Zeitpunkt t2 liegt und der Zeitpunkt t3 nach oder gleich dem Zeitpunkt t1 ist, in Abhängigkeit von:
∘ der Entwicklung der seitlichen Lage des Fahrzeugs im Luftbild zwischen den Zeitpunkten t2 und t3,
∘ der Analyse des Profils eines Streckenabschnitts, der dem rekonstituierten Luftbild zum aktuellen Zeitpunkt t angehört und einer Abfolge von zwischen dem Zeitpunkt t1 und dem aktuellen Zeitpunkt t aufgenommenen Bildern entspricht, wobei der Streckenabschnitt zum Zeitpunkt t3 mindestens teilweise vor dem Fahrzeug liegt.

2. Verfahren nach Anspruch 1, umfassend, nach dem Schritt der Rekonstitution eines Luftbildes (11, 12) des Bodens, die Erfassung mindestens einer Linie, die eine Bodenabgrenzungsmarkierung eines Fahrstreifens im rekonstituierten Luftbild bildet, wobei die Schätzung der Position des Fahrzeugs (100) im rekonstituierten Luftbild (11, 12) darin besteht, die relative Position des Fahrzeugs in Bezug auf die mindestens eine Linie (21, 22) zu bestimmen.

3. Verfahren nach einem der vorstehenden Ansprüche, darüber hinaus umfassend:
- die Aufnahme von Bildern des Gesichts des Fahrers,
- die Analyse der Bilder des Gesichts des Fahrers, wobei die Bestimmung des geschätzten Aufmerksamkeitsgrads des Fahrers ebenfalls von der Analyse der Bilder des Gesichts des Fahrers abhängt.

4. Verfahren nach einem der vorstehenden Ansprüche, wobei die Schätzung der relativen Position des Fahrzeugs (100) in Bezug auf die mindestens eine Linie (11, 12) im rekonstituierten Luftbild die Zusammenstellung aufeinanderfolgender aufgenommener Bilder (10) umfasst, die einer Bodenoberfläche entspricht, die eine Tiefe aufweist, die in Abhängigkeit von der Geschwindigkeit des Fahrzeugs (100) bestimmt wird.

5. Verfahren nach Anspruch 1, wobei die Erfassung mindestens einer Linie (21, 22) die eine Bodenabgrenzungsmarkierung eines Fahrstreifens im rekonstituierten Luftbild (11, 12) bildet, eine Umsetzung einer Hough-Transformation umfasst.

6. Verfahren nach einem der vorstehenden Ansprüche, darüber hinaus einen Schritt der Warnung des Fahrers umfassend, wenn das Fahrzeug (100) die mindestens eine Linie überschreitet.

7. Verfahren nach einem der vorstehenden Ansprüche, wobei die Streifenbreite gleich fünf Meter ist.

8. Verfahren nach einem der vorstehenden Ansprüche, wobei die Tiefe der Bodenoberfläche der aufgenommenen Bilder kleiner als zwei Meter ist.

9. Vorrichtung zur Schätzung des Aufmerksamkeitsgrads des Fahrers eines Fahrzeugs in einem Fahrstreifen, umfassend mindestens eine Kamera, um die kontinuierliche Aufnahme von Bildern (10) des Bodens an der Vorderseite und/oder an der Hinterseite des Fahrzeugs zu verwirklichen, eine Recheneinheit und eine Speichereinheit, die konfiguriert sind, um das Verfahren nach einem der vorstehenden Ansprüche umzusetzen.

10. Vorrichtung nach dem vorstehenden Anspruch, wobei die mindestens eine Kamera eine Frontkamera ist, die an der Vorderseite des Fahrzeugs angeordnet ist.

## Claims

1. Method for estimating the level of attention of the driver of a vehicle moving in a lane of traffic, comprising the following steps:
- capturing images (10) of the ground continuously, at the front and/or at the rear of the vehicle (100), by means of at least one adapted camera, said images (10) corresponding to a surface on the ground having a width at least equal to a lane of traffic width and a depth,
- reconstituting an aerial view (11, 12) of a road section at successive current instants t, by integrating overtime, the images captured (10) between an instant t1 = t - dt1 and the current instant t, dt1 being positive,
- estimating the lateral position of the vehicle (100) in the reconstituted aerial view (11, 12) at said successive current instants t, and the storage of said estimated positions of the vehicle between an instant t2 = t - dt2 and the current instant t, dt2 being positive and independent from dt1,
- determining an estimated level of attention of the driver at an instant t3 = t - dt3, dt3 being positive, the instant t3 being before the instant t2 and the instant t3 being before or equal to the instant t1, according to:
∘the evolution of the lateral position of the vehicle in the aerial view between the instants t2 and t3,
∘the analysis of the profile of a road portion belonging to the aerial view reconstituted at the current instant t and corresponding to a sequence of images captured between the instant t1 and the current instant t, said road portion being at least partially situated upstream of the vehicle at the instant t3.

2. Method according to claim 1, comprising, after the step of reconstituting an aerial view (11, 12) of the ground, the detection of at least one line forming a marking on the ground for delimiting a lane of traffic in said reconstituted aerial view, the estimation of the position of the vehicle (100) in the reconstituted aerial view (11, 12) consisting of determining the relative position of said vehicle with respect to said at least one line (21, 22).

3. Method according to one of the preceding claims, moreover comprising:
- the capturing of images of the face of the driver,
- the analysis of the images of the face of the driver, the determination of the estimated level of attention of the driver also being a function of said analysis of the images of the face of the driver.

4. Method according to one of the preceding claims, wherein the estimation of the relative position of the vehicle (100) with respect to said at least one line (11, 12) in the reconstituted aerial view comprises the assembly of successive captured images (10) corresponding to a surface on the ground having a determined depth according to the speed of the vehicle (100).

5. Method according to claim 1, wherein the detection of at least one line (21, 22) forming a marking on the ground for delimiting a lane of traffic in the reconstituted aerial view (11, 12) comprises the implementation of a Hough Transform.

6. Method according to one of the preceding claims, moreover comprising a step of alerting the driver when the vehicle (100) crosses said at least one line.

7. Method according to one of the preceding claims, said road width being equal to five metres.

8. Method according to one of the preceding claims, said depth of the surface on the ground of the captured images being less than two metres.

9. Device for estimating the level of attention of the driver of a vehicle in a lane of traffic, comprising at least one camera to capture images (10) of the ground continuously, at the front and/or at the rear of the vehicle, a calculation unit and a storage unit, configured to implement the method according to one of the preceding claims.

10. Device according to the preceding claims, wherein said at least one camera is a front camera arranged at the front of the vehicle.
